# EUROPÄISCHE PATENTSCHRIFT

(11) **EP 0 803 456 B1**
(45) Veröffentlichungstag und Bekanntmachung des Hinweises auf die Patenterteilung: **14.10.1998**
(21) Anmeldenummer: 97250033.4
(22) Anmeldetag: 14.02.1997
(51) Int. Cl.: B65G 53/52, F16L 43/00, F15D 1/04, F16L 57/00

(54) **Rohrbogen**
Pipebend
Coude de tuyauterie

(30) Priorität: 27.04.1996 DE 19617006
(43) Veröffentlichungstag der Anmeldung: 29.10.1997
(73) Patentinhaber: MASTERFLEX Kunststofftechnik GmbH, D-45891 Gelsenkirchen (DE)
(72) Erfinder: Schulte, Jürgen, 44869 Bochum (DE)
(74) Vertreter: UEXKÜLL & STOLBERG

(56) Entgegenhaltungen:
- FR-A- 1 067 354
- US-A- 4 461 498
- PATENT ABSTRACTS OF JAPAN vol. 015, no. 208 (M-1117), 28.Mai 1991 & JP 03 056324 A (KAYABA IND CO LTD), 11.März 1991,

## Beschreibung

Die Erfindung bezieht sich auf einen Rohrbogen mit einer Einlaßöffnung und einer Auslaßöffnung, zwischen denen ein stetig gekrümmter Bogenabschnitt verläuft.

Derartige Rohrbögen werden u.a. in Rohrleitungen eingesetzt, in denen körniges oder abrasives Gut, etwa mittels eines Fluides, beispielsweise Luft, transportiert wird. Dabei erzeugt das körnige oder abrasive Gut insbesondere im Bereich der, bezogen auf den Krümmungsmittelpunkt des Rohrbogens, radial außen liegenden Wandung einen starken Verschleiß, weil dort die Körner oder abrasiven Teilchen infolge der Richtungsänderung des Rohrverlaufes auf die Innenfläche der Wandung auftreffen und so einen Abrieb erzeugen.

Man hat bereits Rohre und auch die im Verlauf dieser Rohre vorgesehenen Rohrbögen mit einem Material ausgekleidet, das höhere Verschleißfestigkeit als das eigentliche Rohrmaterial hat. Hierzu wurden beispielsweise kautschukartige Beschichtungen oder Beschichtungen aus Keramik, sogenanntem Schmelzbalsalt oder anderen Werkstoffen, vorgesehen. Diese vollständigen Auskleidungen der Innenflächen von Rohren und Rohrbögen erhöhen zwar die Verschleißfestigkeit, verhindern jedoch nicht, daß wegen der starken Belastung im Bereich der radial äußeren Umfangswand der Rohrbögen hier nach einiger Zeit ein Abrieb der Auskleidung und nachfolgend der Rohrwandung des Rohrbogens auftritt.

Es ist auch bereits bekannt, den Verschleiß im Bereich der radial äußeren Wand eines Rohrbogens dadurch zu reduzieren, daß man in diesem Bereich eine Ausbeulung vorsieht, in der sich dann zu förderndes Gut ablagert und einen Schutz der Rohrwandung gegen den Verschleiß durch den Strom an körnigem oder abrasivem Material bildet. Dieser sogenannte "Flow-Bow" der Firma Stanelle ist zwar sehr wirksam, hat jedoch den Nachteil, daß speziell geformte Rohrbögen benötigt werden.

Es ist ferner bereits bekannt (FR-A-1 067 354, US-A-4 461 498), an der Innenfläche des, bezogen auf den Krümmungsradius, radial äußeren Wandbereichs des Bogenabschnittes eines Rohrbogens eine auskleidende Einlagerung vorzusehen, die eine dem radial inneren Wandbereich des Bogenabschnittes zugewandte Prallfläche aufweist. Diese bekannten Einlagerungen haben jedoch in Richtung quer zum Verlauf des Rohrbogens zwischen Einlaßöffnung und Auslaßöffnug einen gekrümmten Verlauf, so daß sich gefördertes körniges oder abrasives Gut besonders auf den Mittelbereich der Prallfläche konzentriert und dort einen erhöhten Verschleiß hervorruft. Da darüber hinaus die Einlagerung zu beiden Seiten der Winkelhalbierenden durch den Bogenabschnitt symmetrisch verteilt angeordnet ist, liegt dort auch die größte Materialstärke der Einlagerung. Hierbei handelt es sich jedoch nicht immer um denjenigen Bereich, auf den auch die größte Menge geförderten Gutes auftrifft.

Es ist Aufgabe der Erfindung, die Verschleißfestigkeit eines mit einer auskleidenden Einlagerung versehenen, bekannten Rohrbogens zu erhöhen.

Zur Lösung dieser Aufgabe wird ein Rohrbogen mit einer Einlaßöffnung und einer Auslaßöffnung, zwischen denen ein stetig gekrümmter Bogenabschnitt verläuft, wobei an der Innenfläche des, bezogen auf den Krümmungsradius, radial äußeren Wandbereichs des Bogenabschnittes eine auskleidende Einlagerung vorgesehen ist, die eine dem radial inneren Wandbereich des Bogenabschnittes zugewandte Prallfläche aufweist, erfindungsgemäß dadurch ausgestaltet, daß die Prallfläche eben ist und parallel zur Tangente an den Punkt des Bogenabschnittes verläuft, in dem sich die Mittelachse durch die Einlaßöffnung mit der Innenfläche der Wandung des Bogenabschnittes schneidet.

Bei dem erfindungsgemäßen Rohrbogen ist somit die von der auskleidenden Einlagerung gebildete Prallfläche eben, so daß das körnige oder abrasive Gut in gleichmäßiger Verteilung und unter gleichförmigerer Ausrichtung auf den Umlenkbereich des Rohrbogens trifft. Dies verteilt die Abnutzungserscheinung über einen größeren Teil der Prallfläche, so daß die Gefahr des schnellen Verschleißes eines kleinen Bereiches einer gekrümmt ausgebildeten Prallfläche deutlich verringert wird. Darüber hinaus ergibt sich durch die Anordnung der Prallfläche parallel zur Tangente an den Punkt des Bogenabschnittes, in dem sich die Mittelachse durch die Einlaßöffnung mit der Innenfläche der Wandung des Bogenabschnittes schneidet, auch, daß das körnige oder abrasive Gut auf einen Bereich der Einlagerung auftrifft, in dem die Einlagerung ihre größte Materialstärke hat.

Die Einlagerung wird vorzugsweise so ausgebildet, daß der freie Strömungsquerschnitt im Bereich der Einlagerung mindestens 80% des freien Strömungsquerschnittes im einlagerungsfreien Bereich beträgt. Eine derartige Verringerung des Strömungsquerschnitte führt in der Praxis noch nicht zu merkbaren Druckverlusten gegenüber dem Einsatz eines Rohrbogens ohne erfindungsgemäße Einlagerung.

Die Einlagerung kann aus für verschleißfeste Rohrauskleidungen üblichem Material bestehen. In einer besonders bevorzugten Ausgestaltung besteht die Einlagerung aus in den Bogenabschnitt eingegossenem Polyurethan.

Die Erfindung wird im folgenden anhand der Ausführungsbeispiele zeigenden Figuren näher erläutert.
- Figur 1: zeigt im Schnitt einen Rohrbogen.
- Figuren 1A und 1B: zeigen Schnitte entlang der Linie A-A aus Figur 1 mit unterschiedlich großen Einlagerungen.
- Figur 2: zeigt in einer Darstellung entsprechend Figur 1 einen anderen Rohrbogen.
- Figuren 2A und 2B: zeigen Schnitte entlang der Linie B-B aus Figur 2 mit unterschiedlichen großen Einlagerungen.
- Figur 3: zeigt einen Schnitt durch einen anderen Rohrbogen.
- Figur 4: zeigt einen Schnitt durch einen weiteren Rohrbogen.

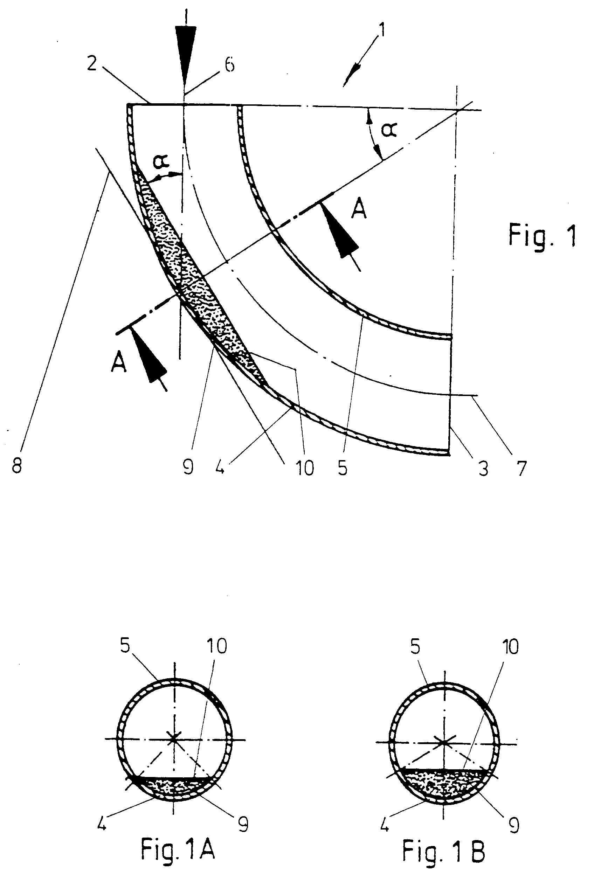

Der in Figur 1 dargestellte Rohrbogen 1 ist von üblicher Bauart und besteht beispielsweise aus Stahl. Er erstreckt sich mit konstantem Krümmungsradius über einen Winkel von 90° und hat am oberen Ende eine Einlaßöffnung 2 und am unteren Ende eine Auslaßöffnung 3. An der Innenfläche der dem in Figur 1 angedeuteten Krümmungsmittelpunkt abgewandten Wandung 4 des Rohrbogens ist eine diesen Bereich der Innenfläche auskleidende Einlagerung 9 vorgesehen, die eine ebene, dem den Krümmungsmittelpunkt näheren Wandbereich 5 zugewandte Prallfläche 10 bildet. Diese Prallfläche 10 verläuft parallel zu einer Tangente 8, die durch den Schnittpunkt der Mittelachse 6 der Einlaßöffnung 2 mit der Wandung 4 des Rohrbogens gelegt ist und die unter einem Winkel α zur Mittelachse 6 geneigt ist. Die Prallfläche 10 erstreckt sich in beiden Richtungen mit gleicher Länge vom angedeuteten Radius durch den Schnittpunkt und verläuft, wie Figur 1 ohne weiteres erkennen läßt, bis über den nicht dargestellten Schnittpunkt einer Geraden mit dem Wandbereich 4 hinaus, die parallel zur Mittelachse 6 und durch den dem Krümmungsmittelpunkt nächsten Punkt der Einlaßöffnung 2 verläuft, also in der Darstellung gemäß Figur 1 eine Tangente an den in der Darstellung rechten Punkt der Einlaßöffnung 2 bildet. Auf diese Weise ist im wesentlichen der gesamte Aufprallbereich für durch die Einlaßöffnung 2 zugeführtes körniges oder abrasives Gut durch die Einlagerung 9 abgedeckt, und das Gut trifft auf die ebene Prallfläche 10.

Wie den Figuren 1A und 1B zu entnehmen ist, kann die Einlagerung 9, die beispielsweise durch Eingießen von Polyurethan in den Rohrbogen 1 ausgebildet wird, unterschiedliche Dicken haben, so daß sich auch unterschiedliche Erstreckungen der Prallfläche 10 ergeben. Der in den Figuren 1A und 1B angedeutete freie Strömungsquerschnitt im Bereich der Einlagerung 9 soll jedoch mindestens 80% des freien Strömungsquerschnittes des einlagerungsfreien Bereiches des Rohrbogens 1 haben.

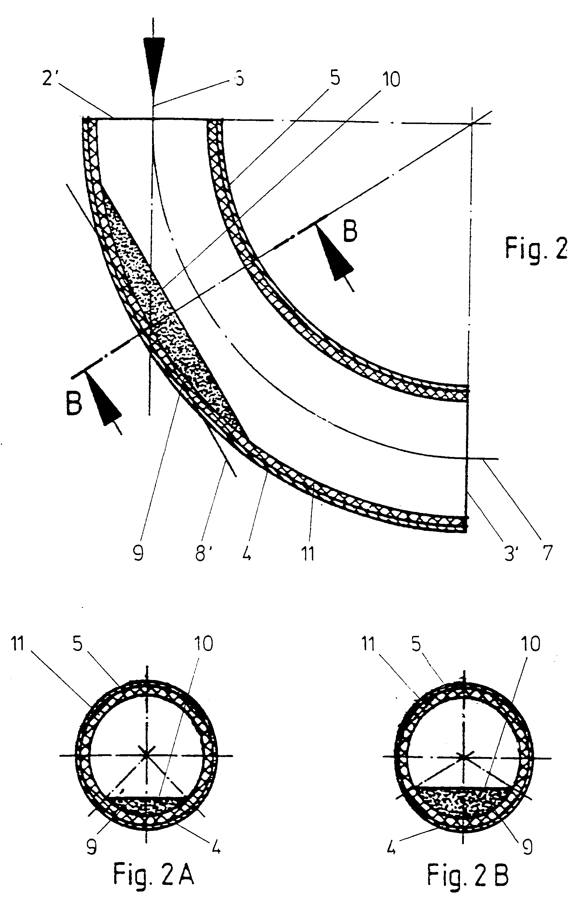

In dem Ausführungsbeispiel gemäß Figuren 2, 2A und 2B sind gleiche Teile wie in den Figuren 1, 1A und 1B mit gleichen Bezugszeichen und entsprechende Teile mit gleichen Bezugszeichen, jedoch zusätzlich mit ' bezeichnet.

Wie ohne weiteres zu erkennen ist, unterscheidet sich der Rohrbogen gemäß Figuren 2, 2A und 2B von dem vorstehend beschriebenen Ausführungsbeispiel dadurch, daß die aus Metall bestehende Rohrwandung eine die gesamte Innenfläche bedeckende Innenauskleidung 11 aufweist, die von für derartige Rohrauskleidungen üblicher Bauart ist. Auf diese Rohrauskleidung 11 ist die auskleidende Einlagerung 9 aufgebracht.

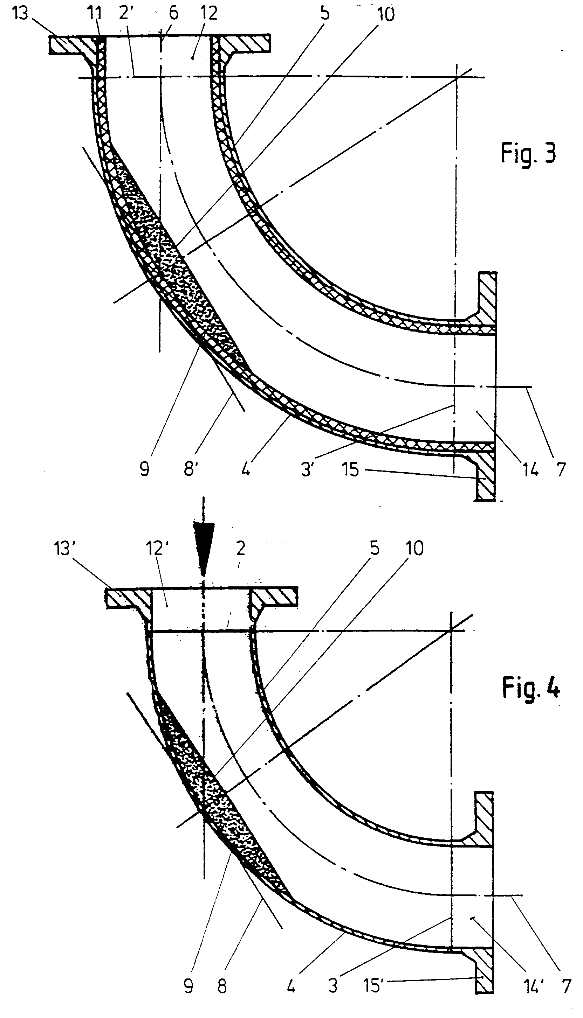

Der Rohrbogen gemäß Figur 3, bei dem gleiche Teile wie in den Figuren 2, 2A und 2B mit gleichen Bezugszeichen bezeichnet sind, unterscheidet sich von dem Ausführungsbeispiel gemäß Figuren 2, 2A und 2B dadurch, daß an den Enden des eigentlichen Rohrbogens ein Einlaßabschnitt 12 mit einem Flansch 13 und ein Auslaßabschnitt 14 mit einem Flansch 15 angeformt sind, wobei auch Einlaßabschnitt 12 und Auslaßabschnitt 14 die Auskleidung 11 aufweisen.

Der Rohrbogen gemäß Figur 4 stellt eine Abwandlung des Rohrbogens gemäß Figuren 1, 1A und 1B dar, wobei gleiche Teile mit gleichen Bezugszeichen bezeichnet sind, und er unterscheidet sich von diesem Rohrbogen durch einen Einlaßabschnitt 12' mit Flansch 13' und einen Auslaßabschnitt 14' mit Flansch 15'.

## Patentansprüche

1. Rohrbogen mit einer Einlaßöffnung (2) und einer Auslaßöffnung (3), zwischen denen ein stetig gekrümmter Bogenabschnitt verläuft, wobei an der Innenfläche des, bezogen auf den Krümmungsradius, radial äußeren Wandbereichs (4) des Bogenabschnittes eine auskleidende Einlagerung (9) vorgesehen ist, die eine dem radial inneren Wandbereich (5) des Bogenabschnittes zugewandte Prallfläche (10) aufweist, **dadurch gekennzeichnet**, daß die Prallfläche (10) eben ist und parallel zur Tangente (8) an den Punkt des Bogenabschnitts verläuft, in dem sich die Mittelachse (6) durch die Einlaßöffnung (2) mit der Innenfläche der Wandung des Bogenabschnittes schneidet.

2. Rohrbogen nach Anspruch 1, **dadurch gekennzeichnet**, daß sich die Einlagerung (9) mindestens bis zum Schnittpunkt derjenigen Geraden mit der radial äußeren Wandung (4) des Bogenabschnittes erstreckt, die parallel zur Mittelachse (6) der Einlaßöffnung (2) und durch den, bezogen auf den Krümmungsradius, radial inneren Punkt der Einlaßöffnung (2) verläuft.

3. Rohrbogen nach Anspruch 1 oder 2, **dadurch gekennzeichnet**, daß der freie Strömungsquerschnitt im Bereich der Einlagerung (9) mindestens 80% des freien Strömungsquerschnittes im einlagerungsfreien Bereich beträgt.

4. Rohrbogen nach einem der Ansprüche 1 bis 3, **dadurch gekennzeichnet**, daß die Einlagerung (9) aus für verschleißfeste Rohrauskleidungen üblichem Material besteht.

5. Rohrbogen nach einem der Ansprüche 1 bis 3, **dadurch gekennzeichnet**, daß die Einlagerung (9) aus in den Bogenabschnitt eingegossenem Polyurethan besteht.

## Claims

1. Pipe bend with an inlet orifice (2) and an outlet orifice (3) between which extends a continuously curved bend portion, wherein the internal surface of the bend portion wall region (4) which is radially external with respect to the radius of curvature is provided with a lining insert (9) having a deflecting face (10) turned toward the radially internal wall region (5) of the bend portion, characterized in that the deflecting face (10) is plane and extends parallel to the tangent (8) at the point of the bend portion in which the centre line (6) through the inlet orifice (2) intersects the internal face of the wall of the bend portion.

2. Pipe bend according to Claim 1, characterized in that the insert (9) extends at least to the point of intersection with the radially external bend portion wall (4) of that straight line which extends parallel to the centre line (6) of the inlet orifice (2) and through the point of the inlet orifice (2) which is radially internal with respect to the radius of curvature.

3. Pipe bend according to Claim 1 or 2, characterized in that the free cross section of flow in the region of the insert (9) is at least 80% of the free cross section of flow in the insert-free region.

4. Pipe bend according to one of Claims 1 to 3, characterized in that the insert (9) consists of material which is normal for wear-resistant pipe linings.

5. Pipe bend according to one of Claims 1 to 3, characterized in that the insert (9) consists of polyurethane which is poured into the bend portion.

## Revendications

1. Coude de tuyauterie présentant une ouverture d'entrée (2) et une ouverture de sortie (3), entre lesquelles s'étend une portion de coude courbée en continu, sur la face intérieure de la zone de paroi (4) radialement extérieure, par rapport au rayon de courbure, de la portion de coude étant prévue une garniture (9) de revêtement, qui présente une surface de rebondissement (10) tournée vers la zone de paroi (5) radialement intérieure de la portion de coude, caractérisé en ce que la surface de rebondissement (10) est plane et s'étend parallèlement à la tangente (8), au point de la portion de coude auquel l'axe médian (6) passant par l'ouverture d'entrée (2) coupe la face intérieure de la paroi de la portion de coude.

2. Coude de tuyauterie selon la revendication 1, caractérisé en ce que la garniture (9) s'étend au moins jusqu'au point d'intersection de la droite avec la paroi (4) radialement extérieure de la portion de coude, qui est parallèle à l'axe médian (6) de l'ouverture d'entrée (2) et qui passe par le point radialement intérieur, par rapport au rayon de courbure de l'ouverture d'entrée (2).

3. Coude de tuyauterie selon la revendication 1 ou 2, caractérisé en ce que la section libre d'écoulement dans la zone de la garniture (9) est au moins égale à 80 % de la section libre d'écoulement dans la zone ne présentant pas de garniture.

4. Coude de tuyauterie selon l'une des revendications 1 à 3, caractérisé en ce que la garniture (9) est faite d'un matériau usuel pour les revêtements de tuyauterie résistant à l'usure.

5. Coude de tuyauterie selon l'une des revendications 1 à 3, caractérisé en ce que la garniture (9) est faite de polyuréthanne coulé dans la portion de coude.
